# EUROPEAN PATENT APPLICATION

(11) **EP 4 776 458 A1**
(43) Date of publication of application: **15.07.2026**
(21) Application number: 26150847.7
(22) Date of filing: 08.01.2026
(51) Int. Cl.: H02J 3/32, H02J 3/38, H02J 3/388, H02J 9/06

(54) **POWER SUPPLY SYSTEM, METHOD FOR CONTROLLING ON-GRID TO OFF-GRID SWITCHING OF POWER SUPPLY SYSTEM, AND INVERTER**

(30) Priority: 09.01.2025 CN 202510038306
(71) Applicant: Huawei Technologies Co., Ltd., Shenzhen, Guangdong 518129 (CN)
(72) Inventor: ZHANG, Peng, Shenzhen, Guangdong, 518129 (CN); LIU, Wentao, Shenzhen, Guangdong, 518129 (CN); TANG, Qidi, Shenzhen, Guangdong, 518129 (CN); LIU, Dong, Shenzhen, Guangdong, 518129 (CN); YANG, Boping, Shenzhen, Guangdong, 518129 (CN)
(74) Representative: Maiwald GmbH

(57) **Abstract**

Embodiments of this application provide a power supply system, a method for controlling on-grid to off-grid switching of the power supply system, and an inverter. The power supply system includes the inverter and an on/off-grid controller. A direct current end and an alternating current end of the inverter are respectively connected to a direct current power supply and an inverter port of the on/off-grid controller. A backup port of the on/off-grid controller is configured to connect to a backup load, and a power grid port of the on/off-grid controller is configured to connect to a power grid. The backup port is connected to the inverter port, and the inverter port is connected to the power grid port through a relay. After detecting that the power grid stops supplying power to the backup load, the inverter suspends outputting an alternating current. A control chip of the on/off-grid controller is configured to: when the inverter suspends outputting the alternating current, or when an instantaneous voltage of the power grid is outside a specified voltage range, control the relay to be turned off, and output a low-level signal or a high-level signal to the inverter via a hardware signal line, so that the inverter switches to a voltage source control mode, and resumes outputting the alternating current to the backup load for power supply.

## Description

### TECHNICAL FIELD

This application relates to the field of power electronics, and in particular, to a power supply system, a method for controlling on-grid to off-grid switching of the power supply system, and an inverter.

### BACKGROUND

With development of the photovoltaic energy storage and power generation industry, home green power solutions are gradually approaching completion. To ensure power supply continuity and reliability of important loads of users, photovoltaic energy storage inverters usually have an on/off-grid output function. For a backup system including an on/off-grid controller and an inverter, the following problems need to be resolved in on-grid to off-grid switching: low accuracy of power grid exception detection, inability to implement seamless switching, and low power supply continuity for backup loads.

### SUMMARY

This application provides a power supply system, a method for controlling on-grid to off-grid switching of the power supply system, and an inverter, to prevent an inverter from stopping operating due to earlier detection of a power grid fault, thereby improving power supply continuity for a backup load during on-grid to off-grid switching.

According to a first aspect, this application provides a power supply system. The power supply system includes an inverter and an on/off-grid controller. A direct current end of the inverter is configured to connect to a direct current power supply, and an alternating current end of the inverter is connected to an inverter port of the on/off-grid controller. The on/off-grid controller includes a relay and a control chip, a backup port of the on/off-grid controller is configured to connect to a backup load, and a power grid port of the on/off-grid controller is configured to connect to a power grid. The backup port is connected to the inverter port, and the inverter port of the on/off-grid controller is connected to the power grid port through the relay. The inverter is configured to convert a direct current from the direct current power supply into an alternating current when the inverter is in a current source control mode and the relay is turned on. The inverter or the power grid is configured to jointly supply power to the backup load. The inverter is further configured to suspend outputting an alternating current after detecting that the power grid stops supplying power to the backup load. The control chip is configured to: when the inverter suspends outputting the alternating current, or when an instantaneous voltage of the power grid is outside a specified voltage range, control the relay to be turned off, and output a low-level signal or a high-level signal to the inverter via a hardware signal line, so that the inverter switches to a voltage source control mode, and converts the direct current from the direct current power supply into the alternating current to supply power to the backup load.

In this implementation, by detecting the instantaneous voltage of the power grid, the control chip may detect, ahead of the inverter, that a power grid voltage is abnormal, to prevent the inverter from stopping operating due to earlier detection of a power grid fault, thereby improving power supply continuity for the backup load. When the relay is turned off, the control chip outputs the low-level signal to the inverter via the hardware signal line, and a transmission delay of the hardware signal line is within 1 ms. This greatly improves a transmission speed of the low-level signal, so that the inverter quickly switches to the voltage source control mode to supply power to the backup load, thereby further improving power supply continuity for the backup load during on-grid to off-grid switching, and implementing seamless on-grid to off-grid switching of the inverter. In addition, during on-grid running of the inverter, the inverter in an islanding mode detects the power grid voltage. When it is detected that the power grid stops supplying power to the backup load, the inverter stops sending a PWM driver gating signal, so that the control chip in the on/off-grid controller can sense a loss of the power grid voltage, thereby smoothly implementing on-grid to off-grid switching.

In a possible implementation, the inverter is configured to: send an alarm signal and shut down after suspending the alternating current output for more than a first preset time interval. When it is detected that the power grid stops supplying power to the backup load, the inverter stops sending a PWM driver gating signal. If the on/off-grid controller does not send a low-level signal to the inverter after the first preset time interval elapses, the on/off-grid controller works abnormally. To ensure that the inverter continuously supplies power to the backup load in an event of a power grid fault, the inverter sends the alarm signal and shuts down for a next off-grid startup.

In a possible implementation, the control chip is configured to: after a voltage amplitude of the power grid is outside a specified voltage range for more than a second preset time interval, control the relay to be turned off, and output the low-level signal or the high-level signal to the inverter via the hardware signal line. After determining that the power grid is faulty, the control chip controls the relay to be turned off, and outputs the low-level signal or the high-level signal to the inverter via the hardware signal line, so that the inverter quickly switches to the voltage source control mode to supply power to the backup load, thereby improving power supply continuity for the backup load during on-grid to off-grid switching.

In a possible implementation, the relay includes a first relay and a second relay that are connected in series. The first relay is connected to the inverter port, the second relay is connected to the power grid port, and a turn-off speed of the first relay is greater than a turn-off speed of the second relay. Because the turn-off speed of the first relay is greater than the turn-off speed of the second relay, the first relay may switch from turn-on to turn-off more quickly, thereby ensuring quick disconnection between the inverter and a power grid side.

In a possible implementation, the power supply system includes a plurality of inverters, and alternating current ends of the plurality of inverters are connected in parallel and then connected to the inverter port of the on/off-grid controller through an on-grid point. The control chip is configured to: when the alternating current output is suspended at the on-grid point, or when the instantaneous voltage of the power grid is outside the specified voltage range, control the relay to be turned off, and output a low-level signal or a high-level signal to the plurality of inverters via the hardware signal line, so that the plurality of inverters switch to the voltage source control mode, and convert the direct current from the direct current power supply into the alternating current to supply power to the backup load. After determining that the power grid is faulty, the control chip controls the relay to be turned off, and outputs the low-level signal or the high-level signal to the plurality of inverters via the hardware signal line, so that the plurality of inverters quickly switch to the voltage source control mode to supply power to the backup load, thereby improving power supply continuity for the backup load during on-grid to off-grid switching.

In a possible implementation, a non-backup port of the on/off-grid controller is configured to connect to a non-backup load, and the non-backup port is connected to the power grid port. The inverter is further configured to: in the current source control mode, enable the inverter or the power grid to jointly supply power to the backup load and the non-backup load.

According to a second aspect, this application provides a method for controlling on-grid to off-grid switching of a power supply system. The method includes: When a relay is turned on and an inverter suspends outputting an alternating current, or when the relay is turned on and an instantaneous voltage of a power grid is outside a specified voltage range, the relay is controlled to be turned off, and a low-level signal or a high-level signal is output to the inverter via a hardware signal line, so that the inverter switches to a voltage source control mode. A direct current end of the inverter is configured to connect to a direct current power supply, and an alternating current end of the inverter is connected to a power grid through the relay.

In this implementation, by detecting the instantaneous voltage of the power grid, a control chip may detect, ahead of the inverter, that a power grid voltage is abnormal, to prevent the inverter from stopping operating due to earlier detection of a power grid fault, thereby improving power supply continuity for the backup load. When the relay is turned off, the low-level signal is output to the inverter via the hardware signal line, and a transmission delay of the hardware signal line is within 1 ms. This greatly improves a transmission speed of the low-level signal, so that the inverter quickly switches to a voltage source control mode to supply power to the backup load, thereby further improving power supply continuity for the backup load during on-grid to off-grid switching. In addition, the inverter in an islanding mode stops sending a PWM driver gating signal when it is detected that the power grid stops supplying power to the backup load. In this way, a loss of the power grid voltage can be sensed, smoothly implementing on-grid to off-grid switching.

In a possible implementation, the method further includes: After the relay is turned on, and a voltage amplitude of the power grid is outside a specified voltage range for more than a second preset time interval, the relay is controlled to be turned off, and the low-level signal or the high-level signal is output to the inverter via the hardware signal line. After it is determined that the power grid is faulty, the relay is controlled to be turned off, and the low-level signal or the high-level signal is output to the inverter via the hardware signal line, so that the inverter quickly switches to the voltage source control mode to supply power to the backup load, thereby improving power supply continuity for the backup load during on-grid to off-grid switching.

According to a third aspect, this application provides an inverter. The inverter includes an inverter circuit, an on-grid relay, and an off-grid relay. A direct current end of the inverter is configured to connect to a direct current power supply, and an on-grid port of the inverter is connected to a power grid. An off-grid port of the inverter is configured to connect to a backup load, and an output end of the inverter circuit is connected to the on-grid port through the on-grid relay. The output end of the inverter circuit is connected to the off-grid port through the off-grid relay. The inverter is configured to convert a direct current from the direct current power supply into an alternating current when the inverter is in a current source control mode and the off-grid relay and the on-grid relay are turned on. The inverter or the power grid is configured to jointly supply power to the backup load. The inverter is further configured to: when it is detected that the power grid stops supplying power to the backup load, or when an instantaneous voltage of the power grid is outside a specified voltage range, or when a voltage amplitude of the power grid is outside a specified voltage range for more than a second preset time interval, control the on-grid relay to be turned off, and switch to a voltage source control mode, to convert the direct current from the direct current power supply into the alternating current to supply power to the backup load.

In this implementation, after the inverter detects that the power grid is abnormal or powered off, the on-grid relay is directly turned off, and the inverter switches to the voltage source mode, thereby improving power supply continuity for the backup load.

### BRIEF DESCRIPTION OF DRAWINGS

FIG. 1 is a diagram of an application scenario of a power supply system according to this application;
FIG. 2 is a diagram of another application scenario of a power supply system according to this application;
FIG. 3 is a diagram of another application scenario of a power supply system according to this application;
FIG. 4 is a schematic of a hardware circuit of an on/off-grid controller according to this application;
FIG. 5 is a schematic of another hardware circuit of an on/off-grid controller according to this application;
FIG. 6 is a schematic flowchart of a method for controlling on-grid to off-grid switching of a power supply system according to this application; and
FIG. 7 is a diagram of an application scenario of an inverter according to this application.

### DESCRIPTION OF EMBODIMENTS

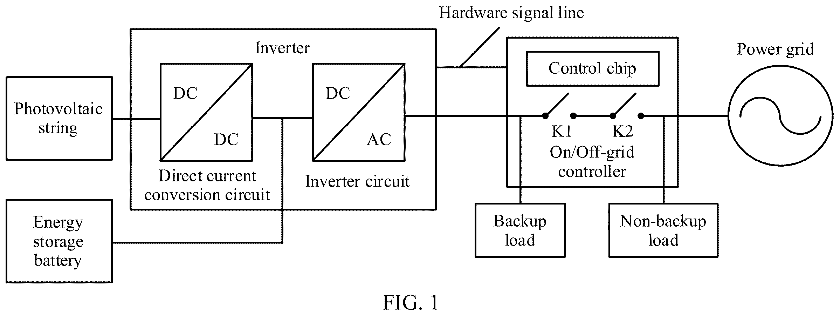

FIG. 1 is a diagram of an application scenario of a power supply system according to this application. The power supply system provided in this application may include an inverter and an on/off-grid controller. A direct current end of the inverter is configured to connect to a direct current power supply, and an alternating current end of the inverter is connected to an inverter port of the on/off-grid controller. Specifically, the direct current power supply may be a photovoltaic string, and the inverter may include a direct current conversion circuit and an inverter circuit. An input end of the direct current conversion circuit is connected to the photovoltaic string, an output end of the direct current conversion circuit is connected to an input end of the inverter circuit, and an output end of the inverter circuit is connected to the inverter port of the on/off-grid controller. The on/off-grid controller includes a relay and a control chip. A backup port and a non-backup port of the on/off-grid controller are respectively configured to connect to a backup load and a non-backup load, and a power grid port of the on/off-grid controller is configured to connect to a power grid. The backup port is connected to the inverter port, the non-backup port is connected to the power grid port, and the inverter port of the on/off-grid controller is connected to the power grid port through the relay.

Herein, in the power supply system shown in FIG. 1, when the relay is turned on and the inverter is connected to the power grid, the inverter may boost, by using the direct current conversion circuit, a direct current provided by the photovoltaic array, and perform inversion conversion on a boosted direct current by using the inverter circuit. Both an alternating current obtained through inversion conversion by the inverter or an alternating current from the power grid may supply power to the backup load and the non-backup load. When the relay is turned off and the inverter is off-grid, the inverter may boost, by using the direct current conversion circuit, a direct current provided by the photovoltaic array, and perform inversion conversion on a boosted direct current by using the inverter circuit. In this case, an alternating current obtained through inversion conversion is output to the backup load for power supply, and the non-backup load is not powered. In a home power supply scenario, the backup load may be an important load in a home of a user, for example, a household appliance or an alarm device, and is not powered off when the power grid has no power. The non-backup load may be a non-important load in the home of the user, for example, a charging pile, and is not powered when the power grid has no power, to ensure that the backup load can be powered for a longer time.

In some feasible implementations, still refer to FIG. 1. The direct current power supply may further include an energy storage battery. An output end of the energy storage battery may be connected to the output end of the direct current conversion circuit in the inverter. The energy storage battery may provide a direct current for the inverter circuit. The inverter circuit performs inversion conversion on the direct current provided by the energy storage battery, and outputs an alternating current obtained through the inversion conversion to the backup load and the non-backup load for power supply.

In the application scenario shown in FIG. 1, during on-grid running of the inverter, the on/off-grid controller detects a power grid voltage by using the control chip, and if the power grid voltage meets an on-grid to off-grid switching condition, controls the inverter to switch from an on-grid mode to an off-grid mode. In a current on-grid to off-grid switching method, power supply continuity of an important load such as a backup load is not considered, so that power supply reliability of the backup load is poor. In addition, if a current power grid is powered off and an inverter runs in an islanding mode, output power of the inverter is balanced, which can meet a power requirement of a load in a power supply system. As a result, an abnormal voltage working condition on the power grid side cannot be detected, and on-grid to off-grid switching cannot be smoothly implemented.

In the power supply system provided in this application, during on-grid running of the inverter, the relay in the on/off-grid controller is turned on, and the inverter is in a current source control mode. During grid connection, the inverter or the power grid supplies power to the backup load and the non-backup load. Specifically, refer to FIG. 1 again. The relay in the on/off-grid controller may include two relays, for example, may include a first relay and a second relay (for ease of description, which may be respectively referred to as a relay K1 and a relay K2) that are connected in series. The relay K1 is connected to the inverter port, and the relay K2 is connected to the power grid port. During on-grid running of the inverter, the relay K1 and the relay K2 in the on/off-grid controller are turned on, and the inverter is in the current source control mode and supplies power to the backup load and the non-backup load. The control chip in the on/off-grid controller is configured to: when the inverter is connected to the power grid and it is detected that an instantaneous voltage of the power grid is outside a specified voltage range, determine that a current power grid voltage is abnormal and an on-grid to off-grid switching condition is met, control the relay K1 and the relay K2 to be turned off, and output a low-level signal or a high-level signal to the inverter via a hardware signal line, so that the inverter switches from the current source control mode to a voltage source control mode. For example, a low-level signal is used as an off-grid signal. The low-level signal is output to the inverter via the hardware signal line, so that the inverter switches to the voltage source control mode. During off-grid, the inverter supplies power only to the backup load. In addition, during on-grid running of the inverter, if the inverter enters an islanding mode, the inverter may detect the power grid voltage. When it is detected that the power grid stops supplying power to the backup load and the non-backup load, the inverter stops sending a PWM driver gating signal and suspends outputting the alternating current. The control chip in the on/off-grid controller is further configured to: when the inverter is in the current source control mode, the relay is turned on, and the inverter suspends outputting the alternating current, determine that a current power grid voltage is lost and the on-grid to off-grid switching condition is met, control the relay K1 and the relay K2 to be turned off, and output the low-level signal to the inverter via the hardware signal line, so that the inverter switches from the current source control mode to the voltage source control mode. Herein, by detecting the instantaneous voltage of the power grid, the control chip may detect, ahead of the inverter, that the power grid voltage is abnormal, to prevent the inverter from stopping operating due to earlier detection of a power grid fault, thereby improving power supply continuity for the backup load. When the relay is turned off, the control chip outputs the low-level signal to the inverter via the hardware signal line, and a transmission delay of the hardware signal line is within 1 ms. This greatly improves a transmission speed of the low-level signal, so that the inverter quickly switches to the voltage source control mode to supply power to the backup load, thereby further improving power supply continuity for the backup load during on-grid to off-grid switching. In addition, during on-grid running of the inverter, the inverter in the islanding mode detects the power grid voltage. When it is detected that the power grid stops supplying power to the backup load and the non-backup load, the inverter stops sending a PWM driver gating signal, so that the control chip in the on/off-grid controller can sense the loss of the power grid voltage, thereby smoothly implementing on-grid to off-grid switching.

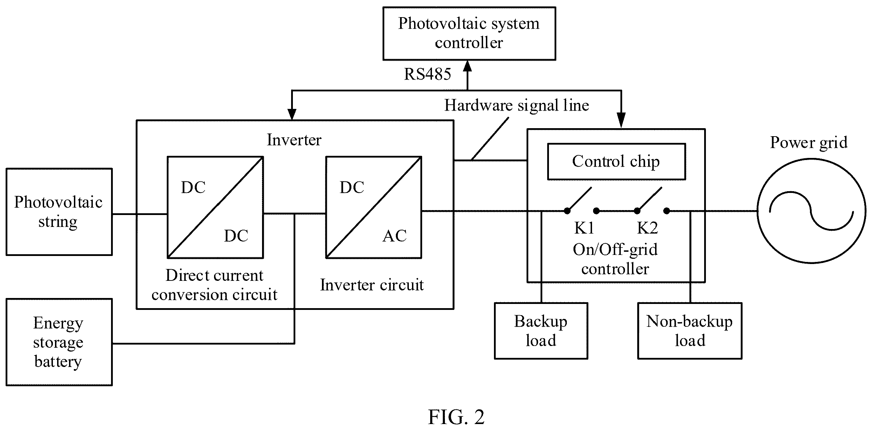

In some feasible implementations, the power supply system includes a photovoltaic system controller. FIG. 2 is a diagram of another application scenario of a power supply system according to this application. As shown in FIG. 2, the power supply system includes a photovoltaic system controller, and the photovoltaic system controller may communicate with an on/off-grid controller and an inverter via a serial port. For example, the on/off-grid controller and inverter are communicatively connected to the photovoltaic system controller via one RS485 link. The photovoltaic system controller is mainly responsible for functions such as communication transmission, power scheduling, and information reporting in the power supply system.

In some feasible implementations, the inverter is configured to: send an alarm signal and shut down after suspending an alternating current output for more than a first preset time interval. For example, in the power supply system shown in FIG. 1 or FIG. 2, during on-grid running of the inverter, a relay K1 and a relay K2 in the on/off-grid controller are turned on, and the inverter is in a current source control mode and supplies power to a backup load and a non-backup load. When the inverter enters an islanding mode, the inverter detects a power grid voltage. When it is detected that a power grid is powered off, the inverter stops sending a PWM driver gating signal and suspends outputting an alternating current. If the inverter outputs the alternating current for more than the first preset time interval, for example, exceeding 20 ms, the inverter sends the alarm signal and shuts down. Herein, the inverter in the islanding mode detects that the power grid is powered off, and the inverter stops sending a PWM driver gating signal. If the on/off-grid controller does not send a low-level signal to the inverter after the first preset time interval elapses, the on/off-grid controller works abnormally. To ensure that the inverter continuously supplies power to the backup load in an event of a power grid fault, the inverter sends the alarm signal and shuts down for a next off-grid startup.

In some feasible implementations, the control chip in the on/off-grid controller is configured to: after the inverter is in the current source control mode, the relay is turned on, and a voltage amplitude of the power grid is outside a specified voltage range for more than a second preset time interval, control the relay to be turned off, and output a low-level signal to the inverter via the hardware signal line. For example, in the power supply system shown in FIG. 1 or FIG. 2, the control chip is further configured to: detect the voltage amplitude of the power grid during grid connection of the inverter, and after detecting that the voltage amplitude of the power grid is outside the specified voltage range for more than the second preset time interval, determine that a current power grid voltage is lost and that an on-grid to off-grid switching condition is met, control the relay K1 and the relay K2 to be turned off, and output the low-level signal to the inverter via the hardware signal line, so that the inverter switches from the current source control mode to a voltage source control mode. Herein, after determining that the power grid is faulty, the control chip controls the relay to be turned off, and outputs the low-level signal or a high-level signal to the inverter via the hardware signal line, so that the inverter quickly switches to the voltage source control mode to supply power to the backup load, thereby improving power supply continuity for the backup load during on-grid to off-grid switching.

In some feasible implementations, for a first relay and a second relay included in the on/off-grid controller, a turn-off speed of the first relay is greater than a turn-off speed of the second relay. The control chip in the on/off-grid controller is further configured to: when it is detected that an instantaneous voltage of the power grid is outside a specified voltage range, or it is detected that the inverter suspends outputting the alternating current, determine that the power grid is faulty and the on-grid to off-grid switching condition is met, and control the first relay and the second relay to be turned off at the same time. The power supply system shown in FIG. 2 is used as an example. For the relay K1 and the relay K2 included in the on/off-grid controller, a turn-off speed of the relay K1 is greater than a turn-off speed of the relay K2. After determining that the power grid is faulty, the control chip controls both the relay K1 and the relay K2 to be turned off. Herein, because the turn-off speed of the relay K1 is greater than the turn-off speed of the relay K2, the relay K1 may be turned off more quickly, thereby ensuring quick disconnection between the inverter and a power grid side.

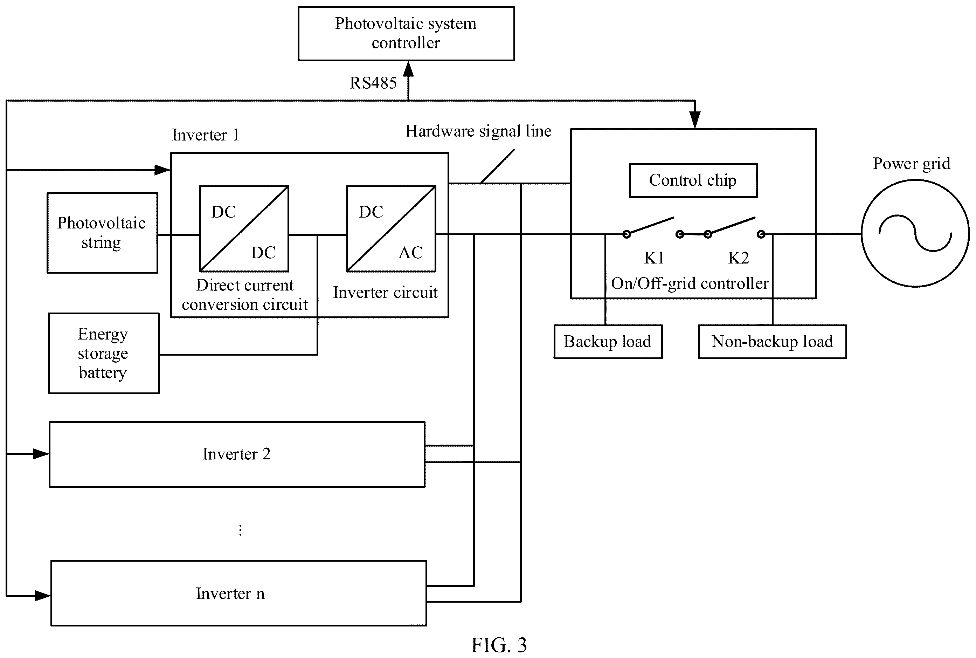

In some feasible implementations, the power supply system includes a plurality of inverters, and alternating current ends of the plurality of inverters are connected in parallel and then connected to an inverter port of the on/off-grid controller through an on-grid point. FIG. 3 is a diagram of another application scenario of a power supply system according to this application. As shown in FIG. 3, the power supply system includes a plurality of inverters: an inverter 1, an inverter 2, ..., and an inverter n, where n is an integer greater than 1. Direct current ends of the inverter 1, the inverter 2, ..., and the inverter n are configured to connect to a direct current power supply. Alternating current ends of the plurality of inverters are connected in parallel and then connected to an inverter port of an on/off-grid controller through an on-grid point. The plurality of inverters may include a direct current conversion circuit and an inverter circuit. For a specific connection relationship, refer to the description of FIG. 1. Details are not described herein again. The inverter 1, the inverter 2, ..., and the inverter n are further connected to the on/off-grid controller via a hardware signal line, and are communicatively connected to a photovoltaic system controller via RS485. When the inverter is in a current source control mode, a relay is turned on, and it is detected that an instantaneous voltage of a power grid is outside a specified voltage range, or it is detected that the alternating current output is suspended at the on-grid point, a control chip determines that the current power grid is faulty, controls a relay K1 and a relay K2 to be turned off, and outputs a low-level signal to the inverter via the hardware signal line. After receiving the low-level signal, the plurality of inverters switch to a voltage source control mode, thereby improving power supply continuity for a backup load during on-grid to off-grid switching.

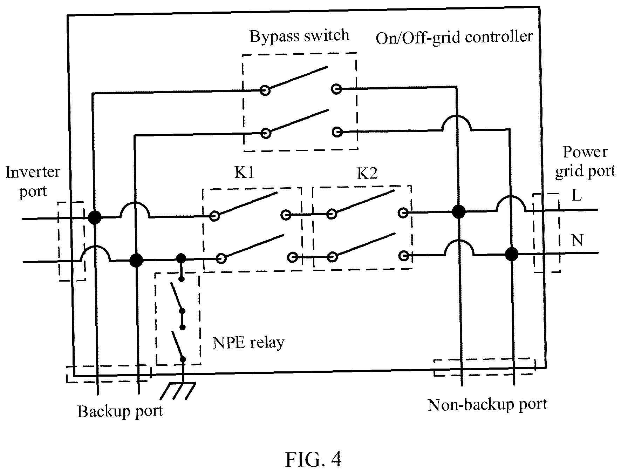

In some feasible implementations, if the inverter is a single-phase inverter, the foregoing on/off-grid controller may be a single-phase on/off-grid controller. FIG. 4 is a schematic of a hardware circuit of an on/off-grid controller according to this application. As shown in FIG. 4, the on/off-grid controller includes a first relay, namely, a relay K1. The relay K1 may include one relay on an L line, or include two relays on an L line and an N line. The on/off-grid controller further includes a second relay, namely, a relay K2. The relay K2 includes two relays on the L line and the N line, and the relay K1 and the relay K2 are connected in series. In addition, the on/off-grid controller further includes an NPE relay and a bypass switch. The NPE relay is connected to the N line, and the bypass switch is connected in parallel across two ends of the relay K1 and the relay K2 that are connected in series. Herein, when the relay K1 and the relay K2 are faulty, and consequently the on/off-grid controller cannot run normally, the bypass switch in the on/off-grid controller may be manually turned on, to restore power supply to a backup load. The NPE relay is designed to be turned on when the inverter is off-grid, that is, when the relay K1 and the relay K2 are turned off.

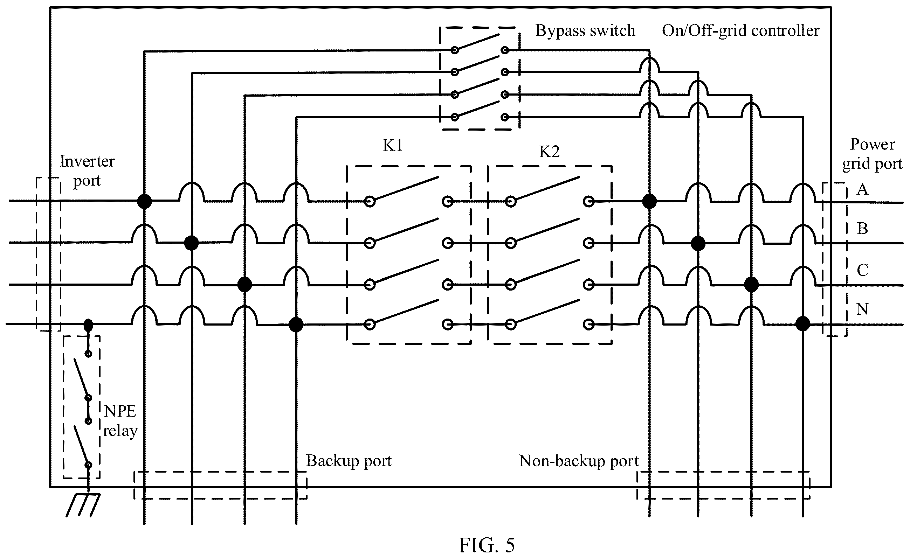

In some feasible implementations, if the inverter is a three-phase inverter, the foregoing on/off-grid controller may be a three-phase on/off-grid controller. FIG. 5 is a schematic of another hardware circuit of an on/off-grid controller according to this application. As shown in FIG. 5, the on/off-grid controller includes a first relay, namely, a relay K1. The relay K1 may include four relays on a phase A, a phase B, a phase C, and a phase N. The on/off-grid controller further includes a second relay, namely, a relay K2. The relay K2 may include four relays on the phase A, the phase B, the phase C, and the phase N. The relay K1 and relay K2 are connected in series. In addition, the on/off-grid controller further includes an NPE relay and a bypass switch. The NPE relay is connected to the N phase, and the bypass switch is connected in parallel across two ends of the relay K1 and the relay K2 that are connected in series. Herein, when the relay K1 and the relay K2 are faulty, and consequently the on/off-grid controller cannot run normally, the bypass switch in the on/off-grid controller may be manually turned on, to restore power supply to a backup load. The NPE relay is designed to be turned on when the inverter is off-grid, that is, when the relay K1 and the relay K2 are turned off.

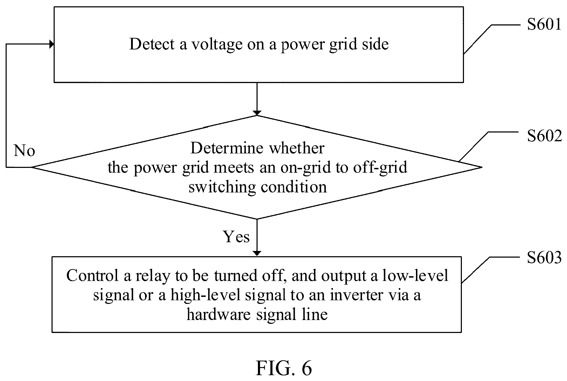

FIG. 6 is a schematic flowchart of a method for controlling on-grid to off-grid switching of a power supply system according to this application. The method for controlling on-grid to off-grid switching of the power supply system provided in this application is applicable to an on-grid to off-grid switching process of the inverter in any one of the power supply systems shown in FIG. 1 to FIG. 3. As shown in FIG. 6, the method for controlling on-grid to off-grid switching of the power supply system provided in this application includes the following steps.

S601: Detect a voltage on a power grid side.

S602: Determine whether the power grid meets an on-grid to off-grid switching condition, and if the power grid meets the on-grid to off-grid switching condition, perform step S603, or if the power grid does not meet the on-grid to off-grid switching condition, perform step S601.

In some feasible implementations, during on-grid running of the inverter, a relay is turned on, and the inverter is in a current source control mode. During grid connection, the inverter or the power grid supplies power to a backup load and a non-backup load. When the inverter is connected to the power grid and it is detected that an instantaneous voltage of the power grid is outside a specified voltage range, it is determined that the current power grid is abnormal and the on-grid to off-grid switching condition is met. Alternatively, when it is detected that the inverter suspends outputting an alternating current, it is determined that a current power grid voltage is lost, and the on-grid to off-grid switching condition is met.

In some feasible implementations, a voltage amplitude of the power grid is detected during grid connection of the inverter. After it is detected that the voltage amplitude of the power grid is outside a specified voltage range for more than a second preset time interval, it is determined that a current power grid voltage is lost, and the on-grid to off-grid switching condition is met.

S603: Control the relay to be turned off, and output a low-level signal or a high-level signal to the inverter via a hardware signal line.

In some feasible implementations, after it is determined that the current power grid voltage meets the on-grid to off-grid switching condition, the relay is controlled to be turned off, and the low-level signal is output to the inverter via the hardware signal line, so that the inverter switches from the current source control mode to a voltage source control mode. Herein, by detecting the instantaneous voltage of the power grid, a control chip may detect, ahead of the inverter, that the power grid voltage is abnormal, to prevent the inverter from stopping operating due to earlier detection of a power grid fault, thereby improving power supply continuity for the backup load. When the relay is turned off, the low-level signal is output to the inverter via the hardware signal line, and a transmission delay of the hardware signal line is within 1 ms. This greatly improves a transmission speed of the low-level signal, so that the inverter quickly switches to the voltage source control mode to supply power to the backup load, thereby further improving power supply continuity for the backup load during on-grid to off-grid switching. In addition, the inverter in an islanding mode stops sending a PWM driver gating signal when it is detected that the power grid is powered off. In this way, the loss of the power grid voltage can be sensed, smoothly implementing on-grid to off-grid switching.

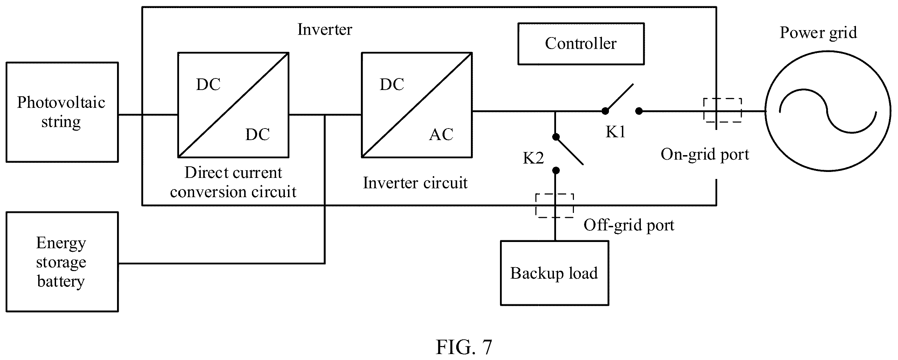

This application further provides an inverter. The inverter includes an inverter circuit, an on-grid relay, and an off-grid relay. A direct current end of the inverter is configured to connect to a direct current power supply, and an on-grid port of the inverter is connected to a power grid. An off-grid port of the inverter is configured to connect to a backup load, and an output end of the inverter circuit is connected to the on-grid port through the on-grid relay. The output end of the inverter circuit is connected to the off-grid port through the off-grid relay. FIG. 7 is a diagram of an application scenario of an inverter according to this application. As shown in FIG. 7, the inverter may include a direct current conversion circuit and an inverter circuit. An input end of the direct current conversion circuit is used as a direct current end of the inverter to connect to a photovoltaic string, and an output end of the direct current conversion circuit is connected to an input end of the inverter circuit. The inverter may further include a relay and a controller. For example, the inverter may include an on-grid relay and an off-grid relay (for ease of description, the on-grid relay is referred to as a relay K1, and the off-grid relay is referred to as a relay K2). An output end of the inverter circuit is connected to an on-grid port through the relay K1, and the output end of the inverter circuit is connected to an off-grid port through the relay K2. The relay K1 and the relay K2 each may be a single relay, or may be a relay group including a plurality of relays. During on-grid running of the inverter, the relay K1 is turned on, the relay K2 is turned on, the inverter is in a current source control mode, and the inverter or the power grid is configured to jointly supply power to the backup load. When the inverter is in the current source control mode, the relay K1 is turned on, the relay K2 is turned on, and it is detected that an instantaneous voltage of the power grid is outside a specified voltage range, or it is detected that the power grid stops supplying power to the backup load, or after a voltage amplitude of the power grid is outside a specified voltage range for more than a second preset time interval, the controller may determine that the power grid is abnormal or powered off, and an on-grid to off-grid switching condition is met. In this case, the controller controls the relay K1 to be turned off, and the inverter switches to a voltage source control mode to supply power to the backup load. Herein, after it is detected that the power grid is abnormal or powered off, the on-grid relay is directly turned off, and the inverter switches to the voltage source mode, thereby improving power supply continuity for the backup load.

## Claims

1. A power supply system, wherein the power supply system comprises an inverter and an on/off-grid controller, a direct current end of the inverter is configured to connect to a direct current power supply, and an alternating current end of the inverter is connected to an inverter port of the on/off-grid controller;
the on/off-grid controller comprises a relay and a control chip, a backup port of the on/off-grid controller is configured to connect to a backup load, a power grid port of the on/off-grid controller is configured to connect to a power grid, the backup port is connected to the inverter port, and the inverter port of the on/off-grid controller is connected to the power grid port through the relay;
the inverter is configured to convert a direct current from the direct current power supply into an alternating current when the inverter is in a current source control mode and the relay is turned on, wherein the inverter or the power grid is configured to jointly supply power to the backup load;
the inverter is further configured to suspend outputting the alternating current after detecting that the power grid stops supplying power to the backup load; and
the control chip is configured to: when the inverter suspends outputting the alternating current, or when an instantaneous voltage of the power grid is outside a specified voltage range, control the relay to be turned off, and output a low-level signal or a high-level signal to the inverter via a hardware signal line, so that the inverter switches to a voltage source control mode, and resumes outputting the alternating current to the backup load for power supply.

2. The power supply system according to claim 1, wherein the inverter is configured to: send an alarm signal and shut down after suspending the alternating current output for more than a first preset time interval.

3. The power supply system according to claim 1 or 2, wherein the control chip is configured to: after a voltage amplitude of the power grid is outside a specified voltage range for more than a second preset time interval, control the relay to be turned off, and output the low-level signal or the high-level signal to the inverter via the hardware signal line.

4. The power supply system according to any one of claims 1 to 3, wherein the relay comprises a first relay and a second relay that are connected in series, the first relay is connected to the inverter port, the second relay is connected to the power grid port, and a turn-off speed of the first relay is greater than a turn-off speed of the second relay.

5. The power supply system according to any one of claims 1 to 4, wherein the power supply system comprises a plurality of inverters, and alternating current ends of the plurality of inverters are connected in parallel and then connected to the inverter port of the on/off-grid controller through an on-grid point; and
the control chip is configured to: when an alternating current output is suspended at the on-grid point, or when the instantaneous voltage of the power grid is outside the specified voltage range, control the relay to be turned off, and output the low-level signal or the high-level signal to the plurality of inverters via the hardware signal line, so that the plurality of inverters switch to the voltage source control mode, and convert the direct current from the direct current power supply into the alternating current to supply power to the backup load.

6. The power supply system according to any one of claims 1 to 5, wherein a non-backup port of the on/off-grid controller is configured to connect to a non-backup load, and the non-backup port is connected to the power grid port; and
the inverter is further configured to: in the current source control mode, enable the inverter or the power grid to jointly supply power to the backup load and the non-backup load.

7. A method for controlling on-grid to off-grid switching of a power supply system, comprising:
when a relay is turned on and an inverter suspends outputting an alternating current, or when the relay is turned on and an instantaneous voltage of a power grid is outside a specified voltage range, controlling the relay to be turned off, and outputting a low-level signal or a high-level signal to the inverter via a hardware signal line, so that the inverter switches to a voltage source control mode, wherein
a direct current end of the inverter is configured to connect to a direct current power supply, and an alternating current end of the inverter is connected to the power grid through the relay.

8. The method according to claim 7, wherein the method further comprises:
after the relay is turned on, a voltage amplitude of the power grid is outside a specified voltage range for more than a second preset time interval, controlling the relay to be turned off, and outputting the low-level signal or the high-level signal to the inverter via the hardware signal line.

9. An inverter, wherein the inverter comprises an inverter circuit, an on-grid relay, and an off-grid relay, a direct current end of the inverter is configured to connect to a direct current power supply, an on-grid port of the inverter is connected to a power grid, an off-grid port of the inverter is configured to connect to a backup load, an output end of the inverter circuit is connected to the on-grid port through the on-grid relay, and the output end of the inverter circuit is connected to the off-grid port through the off-grid relay;
the inverter is configured to convert a direct current from the direct current power supply into an alternating current when the inverter is in a current source control mode and the off-grid relay and the on-grid relay are turned on, wherein the inverter or the power grid is configured to jointly supply power to the backup load; and
the inverter is further configured to: when it is detected that the power grid stops supplying power to the backup load, or when an instantaneous voltage of the power grid is outside a specified voltage range, or when a voltage amplitude of the power grid is outside a specified voltage range for more than a second preset time interval, control the on-grid relay to be turned off, and switch to a voltage source control mode, to convert the direct current from the direct current power supply into the alternating current to supply power to the backup load.
